(19) Europäisches Patentamt / European Patent Office / Office européen des brevets

(11) **EP 4 346 413 B1**

(12) **EUROPEAN PATENT SPECIFICATION**

(45) Date of publication and mention of the grant of the patent:
**24.12.2025  Bulletin 2025/52**

(21) Application number: **22810787.6**

(22) Date of filing: **24.05.2022**

(51) International Patent Classification (IPC):
**A01N 63/30** (2020.01)        **A01P 3/00** (2006.01)
**C05F 11/08** (2006.01)        **C05G 3/60** (2020.01)

(52) Cooperative Patent Classification (CPC):
(C-Sets available)
**A01P 3/00; A01N 63/30; C05F 11/08; C05G 3/60**
(Cont.)

(86) International application number:
**PCT/IL2022/050545**

(87) International publication number:
**WO 2022/249174 (01.12.2022 Gazette 2022/48)**

(54) **MYCORRHIZAL FUNGI PLANT PROTECTION COMPOSITION AND METHOD**

MYKORRHIZAPILZPFLANZENSCHUTZZUSAMMENSETZUNG UND VERFAHREN

COMPOSITION ET PROCÉDÉ DE PROTECTION PHYTOSANITAIRE CONTENANT DES CHAMPIGNONS MYCORHIZIENS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2021  IL 28341021**

(43) Date of publication of application:
**10.04.2024  Bulletin 2024/15**

(73) Proprietor: **Groundwork Bioag Ltd.**
**4322616 Raanana (IL)**

(72) Inventors:
• **ISACK, Yochai**
  **4352451 Raanana (IL)**
• **LEVY, Dan**
  **5838208 Holon (IL)**
• **KOFMAN, Yosef**
  **4322616 Raanana (IL)**

(74) Representative: **Harrison IP Limited**
**Mereside, Alderley Park**
**Congleton Road**
**Nether Alderley**
**Macclesfield, Cheshire SK10 4TG (GB)**

(56) References cited:
**CN-A- 111 642 338        US-A1- 2016 270 407**
**US-A1- 2018 235 219**

• **GARMENDIA I ET AL: "Effectiveness of three Glomus species in protecting pepper (Capsicum annuum L.) against verticillium wilt", BIOLOGICAL CONTROL, SAN DIEGO, CA, US, vol. 31, no. 3, 1 November 2004 (2004-11-01), pages 296 - 305, XP004581309, ISSN: 1049-9644, DOI: 10.1016/J.BIOCONTROL.2004.04.015**
• **NWAGA ET AL: "Pseudomonads and symbiotic micro-organisms as biocontrol agents against fungal disease caused by Pythium aphanidermatum", AFRICAN JOURNAL OF BIOTECHNOLOGY, 5 February 2007 (2007-02-05), pages 190 - 197, XP093198975, Retrieved from the Internet <URL:https://www.ajol.info/index.php/ajb/article/download/56136/44583>**

(52) Cooperative Patent Classification (CPC): (Cont.)

C-Sets
**A01N 63/30, A01N 63/30**

**Description**

**TECHNICAL FIELD**

The present invention relates to compositions for protection of plants. In particular the invention relates to plant protection compositions.

**BACKGROUND ART**

The increase of human population, life quality and life expectancy drives a constant increase for food demand of which alongside climate change sets a real challenge for agriculture to meet this growing demand amid a changing environment. Plant pathogenic fungi are a significant contributor to economic loss to crops. In particular, soil-borne fungi are a main concern. Important examples include *Gaeumannomyces graminis* (wheat), *Rhizoctonia solani* (Collar rot, root rot, damping off and wire stem), *Sclerotinia homoeocarpa, Pythium spp.* (damping-off), *Trichoderma, Armillaria mellea* (honey fungus, with a wide host range of trees), *Fusarium oxysporum* (a wide variety of forms, which affect a broad range of plants such as cucumber, soy and banana).

Decades of use of chemical fungicides has led many fungi to acquire resistance to fungicides to which they were exposed. In addition, many chemical fungicides exhibit side effects which result reducing yield and quality of the crop. This has led to the search for not only new fungicidal combinations and new active ingredients (Als) which can provide protection against fungal pathogens but also for alternatives to chemical Als.

One such alternative treatment which has drawn thus far too little attention is the use of mycorrhizal fungi for protecting crops. Mycorrhizae is a mutual symbiotic association between a beneficial fungus and a plant. The term mycorrhiza refers to the role of the fungus in the root system of the plant (rhizosphere). Mycorrhizae plays important roles in plant nutrition, soil biology and soil chemistry but there is a growing body of evidence that mycorrhizae may play a role in providing protection against pathogenic fungi. As each species of mycorrhizal fungi has a unique profile of characteristics - some are especially proficient at releasing nutrients bound in organic matter, some produce more effective antibiotics or growth regulators than others, and some are more active in cool, hot, wet, or dry times of year than others it is very difficult to predict the effect of an individual mycorrhizal fungi on a specific crop.

Mycorrhizal fungi of *Glomus* species, namely <u>*Glomus mosseae*</u> (*G. mosseae*), <u>*Glomus intraradices*</u> (*G. intraradices*) and *Glomus deserticola* (*G. deserticola*) were shown to have varied effectiveness as biocontrol agents on the development of <u>*Verticillium*</u>-induced wilt in <u>*Capsicum annuum*</u> cv. Piquillo (see: Garmendia et al., Biological Control, 2004, 31, 296-305). Cultures of G. *deserticola* associated with a selected strain of pseudomonad (*Pseudomonas fluorescens*) were shown to inhibit *Pythium aphanidermaturm,* a casual agent of seedlings damping-off and stem rot of cowpea (see: Nwaga, D. et al., African J. Biotech. 2007, 6, 190-197). CN 111642338A discloses a method for promoting banana seedling growth by inoculating arbuscular mycorrhizal fungi is characterized by comprising the following steps: and inoculating the arbuscular mycorrhizal fungi mixture of G. *intraradices* and *G. manihotis* to the root system of banana seedlings. None of the aforementioned publications, discusses plant protection mixtures of G. *manihotis* and *G. deserticola.*

Applying mycorrhizal fungi in the protection of plants against harmful fungi thus still faces many challenges.

**SUMMARY OF INVENTION**

The aim of the invention is to provide a mycorrhizal mixture which will provide protection against pathogenic fungi.

It is yet a further aim to provide a method and/or composition for increasing the efficacy of chemical fungicides against a pathogenic fungi.

It is yet a further aim of the invention to provide a method and composition which will increase the yield and quality of crops amid a pathogenic fungal attack.

It is yet a further aim of the invention to provide a method and composition which will increase the yield and quality of crops when applying a chemical fungicide against a pathogenic fungus.

In a first aspect the invention provides a plant protection mixture comprising a protective effective amount of mycorrhizal fungi of the species G. *manihotis* and G. *deserticola.*

In another aspect the invention provides a plant protection composition comprising at least one of an agriculturally acceptable adjuvant and an agriculturally acceptable carrier, and a protective effective amount of the plant protection mixture described above.

In a further aspect the invention provides a method for the protection of a plant from a fungal pathogen attack, wherein the method comprises applying a protective effective amount of the plant protection composition described above to at least one of:

(i) a plant propagation material of a plant;

(ii) a locus in which fungal infestation is to be prevented or controlled; and

(iii) a plant or plant part.

The protection of the plant can be manifested by prevention or control of a pathogenic fungal attack on the plant.

In yet another aspect, the invention provides a seed coated with the composition as defined above, and a seed mixture wherein the seeds may be averagely coated with 0.1-30- viable spores/seed.

## BRIEF DESCRIPTION OF THE DRAWINGS

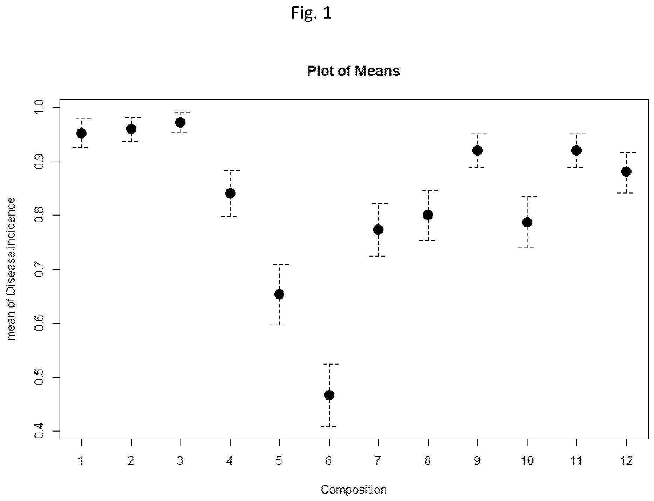

FIG. 1 depicts disease incidence of cucumber plants 28 days after inoculation (DAI) with *Fusarium oxysporum* f.sp. *radices-cucumerinum* and treated with plant protection compositions comprising mycorrhizal fungi selected from *G. intraradices G. mosseae, G. deserticola and G. manihotis.* Composition 1 included only the carrier and is used as a control. Values are mean $\pm$ SE.

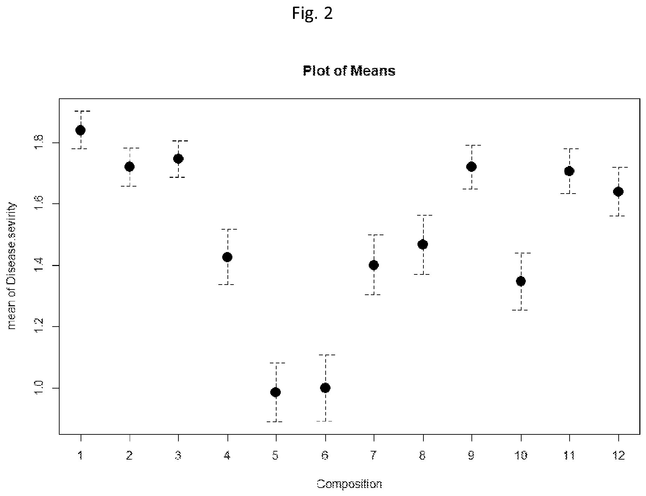

Fig. 2 depicts disease severity of Cucumber plants 28 DAI with *Fusarium oxysporum* f.sp. radices-cucumerinum and treated with plant protection compositions comprising mycorrhizal fungi selected from *G. intraradices G. mosseae, G. deserticola and G. manihotis.* Composition 1 included only the carrier and is used as a control. Symptom's index was as follow: 0 - none, 1 - moderate, 2- severe and death. Values are mean $\pm$ SE.

## DESCRIPTION OF EMBODIMENTS

For better understanding of the present invention and in order to exemplify how it may be implemented in practice, several embodiments are hereby described, which should be interpreted only as non-limiting examples. The description is not to be considered as limiting the scope of the embodiments described herein.

The inventor of the present invention found that applying a mixture of *Glomus manihotis* and *Glomus deserticola* is especially useful in preventing fungus disease in plants. In particular, the inventors have found that this mixture is effective in protecting vegetables against pathogenic fungi of the *Fusarium* genera, especially against *Fusarium* oxysporum f.sp. *radicis-cucumerinum* in cucumber.

## Mixture

Therefore, the invention provides a plant protection mixture comprising a protective effective amount of mycorrhizal fungi of the species *Glomus manihotis* (*G. manihotis*) and *Glomus deserticola* (*G. deserticola*).

The term "***plant protection mixture***" refers herein to at least two agents (each agent can be a chemical compound, a mycorrhizal fungus or a bacteria) that controls, modifies, or prevents the growth of pathogenic fungi.

The term "***protective effective amount***" refers herein to the quantity of such an agent or combination of such agents that is capable of preventing, reducing, producing control or modifying effect on the growth of a pathogenic fungus. Controlling or modifying effects include all deviation from natural development or propagation of the pathogenic fungus, retardation of the propagation and the like, and prevention includes barrier or other defensive formation in or on a plant to prevent fungal infection of the plant. The term "fungicidal effective amount" refers to all of the above in addition to control by causing the death of cells of the pathogenic fungus (e.g. cell cycle arrest).

In some embodiments, none of the ingredients of the mixture are involved with causing death of fungi. In some embodiments, all of the ingredients that provide protection to a plant against a pathogenic fungus, do so by non-lethal pathways such as increasing protection and/or resistance capabilities of the plant toward the damaging effects of the pathogenic fungus, or by competing for natural habitat or resources of the pathogenic fungus.

The term "***mycorrhizal fungi***" refers herein to fungi which establish a symbiotic relationship with a plant, through formation of dual organs of absorption that are formed when the symbiotic fungi inhabits healthy absorbing organs (roots, rhizomes, or thalli). The fungus colonizes the cortex of the host plant root and grows hyphae (the filaments of the root) into an extended volume of soil, which absorbs nutrients and water and transport them to host roots.

The concentration ratio of *G. manihotis* to *G. deserticola* can be between 1:99 to 99:1, in some embodiments the ratio can be between 1:9 to 9:1. The plant protection mixture can comprise 10%, 20%, 30%, 40%, 50%, 60%, 70%, 80% or 90% viable spores of the species *G. manihotis* out of the total number of viable spores of the species *G. manihotis* and *G. deserticola* in the mixture.

In some embodiments, the mixture comprising the species *G. manihotis* and *G. deserticola* further comprises at least one mycorrhizal fungus selected from *G. intraradices* and *G. mosseae.* In such embodiments, the percentage of spores of each of the mycorrhizal fungi present in the mixture can be present in an amount of between 0.1 to 99 % out of the total amount of mycorrhizal fungi spores given that the combined percentage does not exceed 100%. As a non-limiting example the mixture can comprise 45% spores of *G. manihotis* 45% of *G. deserticola* 9.5% spores of *G. intraradices* and 0.5% spores of *G. mosseae.* In some embodiments, the mixture comprises at least one of G. *intraradices* and *G. mosseae.*

The term "***mycorrhizal fungus propagule***" refers herein to any infectious agent or composition capable of inducing mycorrhizal fungus infection in plant roots. Thus, mycorrhizal fungus propagules can include, but are not limited to, mycorrhizal fungus spores, hyphae, hyphal tips, and mycorrhizal fungus infected root tissue.

The term "**hyphae**" refers herein to a plurality of long, branching filamentous structures of a mycorrhizal fungus, which are the fungal mode of vegetative growth (also referred to as *mycelium*).

In some embodiments, the plant protection mixture comprises mycorrhizal propagules in the form selected from of ground roots of plants which comprise the mycorrhizal fungi that are present in the mixture.

Mycorrhizal Fungi can be either obtained commercially or grown in house. The mycorrhizal fungi can be grown according to common methods known in the art. The desired mycorrhizal fungi can be grown in-vitro on a split-plate, on agar media with or without roots or a plant, in a bioreactor or in liquid fermentation. The desired mycorrhizal fungi can be grown by infecting roots of a host plant such as sorghum, maize, rice, Sudan grass, barley, wheat, carrot, potato, chicory, onion and tagetes (known as Marigold) in sand or directly on a carrier which can be further used in a granular or powder formulation. In some embodiments, the mycorrhizal fungi can be grown by infecting roots of a host plant which is the target plant for protection. In some embodiments, the host plants are grown in a soil being similar to the soil which the target plant for protection is being grown. In the case that the mycorrhizal fungi are grown in sand then after the roots are taken out of the growing pot, the sand can be washed prior to the collective grinding of the roots and the mycorrhizal hyphae. In the case that the mycorrhizal fungi is grown on a carrier (e.g. vermiculate, perlite, zeolite, peat and cocopeat), the hyphae and plant roots system can be ground together with the carrier.

Grinding of the roots and hyphae can be performed by using a grinder such as hammer mill, knife grinder or Wiley mill. After the roots and hyphae are ground, the ground particles are fractionated into particle size range using a series of mesh according to known techniques.

In some embodiments, the propagules, regardless of their source, are ground, chopped or cut into particles. The particles may be fragments, cuts, granules, pieces of mycorrhizal fungi propagating material as detailed above. The particles may be characterized by a particle size of between 20 $\mu$m to 1000 $\mu$m. In some embodiments, the particles are characterized by having a spore concentration of 3-70000 viable spores/g, and in some embodiments 200-70000 viable spores/g. The value of spores/g relates to the total number of viable spores that are present in the propagule material, e.g., 3-7000 viable spores/g means that there are 3-7000 viable spores of mycorrhizal fungi per gram of particles). In some embodiments, the propagule particles are characterized by a particle size of at least 20 $\mu$m, at least 30 $\mu$m, at least 40 $\mu$m or at least 50 $\mu$m. In some embodiments, the propagule particles are characterized by a particle size of between 20 $\mu$m to 100 $\mu$m, 30 $\mu$m to 100 $\mu$m, 38 $\mu$m to 100 $\mu$m, 38 $\mu$m to 250 $\mu$m, 100 $\mu$m to 200 $\mu$m, 100 $\mu$m to 500 $\mu$m, 200 $\mu$m to 300 $\mu$m, 300 $\mu$m to 400 $\mu$m, 400 $\mu$m to 500 $\mu$m, 500 $\mu$m to 600 $\mu$m, 250 to 500 $\mu$m, 500 $\mu$m to 750 $\mu$m, 750 $\mu$m to 1000 $\mu$m, 100 $\mu$m to 1000 $\mu$m, 200 $\mu$m to 800 $\mu$m or 500 $\mu$m to 2 mm. In some embodiments, the propagule particles are characterized by comprising at least 100 viable spores/g, at least 200 viable spores/g, at least 300 viable spores/g, at least 400 viable spores/g, at least 500 viable spores/g, at least 1000 viable spores/g or at least 2000 viable spores per gram of propagule material (i.e., propagule particles). In some embodiments, the propagule particles are characterized by comprising 100-70000 viable spores/g, 1000-70000 viable spores/g, 2000-70000 viable spores/g, 5000-70000 viable spores/g, 6000-70000 viable spores/g, 6000-60000 viable spores/g, 10000-50000 viable spores/g, 20000-40000 viable spores/g, or 40000-70000 viable spores/g.

The size of the particles is determined by Standard gradation test by sieves as described in "Characterisation of bulk solids" by Donald Mcglinchey, CRC Press, 2005. pp 230-258.

The number of viable spores can be determined by counting the number of viable spores under a light microscope after the spores are dyed, as detailed in Walley, F.L. et al. Mycologia 1995, 30, 273-279.The spores are dyed by adding 20 ml of a stock solution of 0.5 gr/L of Thiazolyl Blue Tetrazolium Bromide (MTT) per 1 gr of analyte for 72 hr. at 28°C. The total number of spores and the number of viable spores is then counted (viable spores are stained in red) Other dying methods are also available in the art. Other counting methods, such as dilution methods, are also available in the art.

The term "***plant propagation material***" refers herein to all of the generative parts of the plant (e.g., seeds) and vegetative plant material (e.g., cuttings and tubers), which can be used for the multiplication of the plant. The propagation material includes seeds, roots, fruits, tubers, bulbs, rhizomes, shoots, sprouts and other parts of plants, including seedlings and young plants, which can be transplanted after germination or after emergence from the soil. Young plants may also be protected before transplantation by a total or partial treatment by immersion of the plant in a solution comprising the composition of the invention or by pouring/spraying the composition of the invention on the roots of the plant.

The composition of the invention may contain in addition to the mycorrhizal fungi propagules, a polymer, or a mixture of polymers in order to create a binding polymeric matrix to bind the propagules to the inoculated media (i.e., soil, the roots, seeds or tubers of the plant). The amount of polymer will depend on its biocompatibility with the selected plant typically from about 1% to about 5% (w/w) out of the total weight of the composition. Examples of suitable polymers include polyvinyl alcohol, polyvinyl pyrrolidone, polyacrylamide, hydroxypropyl methylcellulose, and methylcellulose.

The term "*about*" should be construed in the context of this disclosure as any value departing by 10% from the value it refers to (e.g., 9 to 11 for the value 10) or to the next digit of the value which rounds to the value (e.g. 0.51 to 1.49 for the value 1), whichever is broader in range.

The mycorrhizal fungi of the invention can be prepared in a variety of known and practiced methods. For example, see Kadian N. et al Indian J. Exp. Bio. 2018, 56, 258-266.

In some embodiments, the plant protection mixture comprises mycorrhizal fungi propagules in the form selected from ground roots of plants comprising *G. manihotis,* ground roots of plants comprising *G. deserticola,* ground hyphae of *G. manihotis,* ground hyphae of *G. deserticola,* spores of *G. manihotis,* spores of *G. deserticola* and mixtures thereof.

**Fusarium**

In some embodiments the plant protection mixture of the invention is for use for protecting a plant against *Fusarium,* treating a plant infected by *Fusarium* or ameliorating damage to a plant caused by *Fusarium.*

The term *"Fusarium"* refers herein to any pathogenic fungi of the genus *Fusarium.* In particular, the invention relates to mixture and compositions for treating and protecting plants from pathogenic fungi species of *Fusarium* selected from *F. (Fusarium) Affine* (affecting Tobbaco), *F. arthrosporioides (affecting Chickpea), F. oxysporum (Fusarium Wilt), F. circinatum, F. crookwellence (cerealis)* (pathogen in potato, of corn ear rot, wheat head blight and necrotinc blight on cones of hops), *F. culmorum* (seedling blight, foot rot, ear blight, stalk rot, common root rot and other diseases of cereals, grasses, and a wide variety of monocots and dicots), *F. graminearum* (fusarium head blight in wheat and barley), *F. incarnatum, F. langsethiae, F. mangiferae (in mango), F. merismoides, F. pallidoroseum* (pathogen in banana, maize and pigeonpea), *F. proliferatum* (pathogen in asparagus), *F. pseudograminearum* (crown rot in wheat), *F. redolens* (pathogen in asparagus), *F. redolens, F. solani (virguliforme), F. sporotrichioides* (Fusarium head blight in wheat), *F. sterilihyphosum* (pathogen in mango), *F. subglutinans, F. sulphureum* (pathogen in maize and hemp), *F. tricinctum, F. venenatum, F. verticillioides (pathogen in maize).* In some embodiments the mixture of the invention is used against *F. oxysporum (Fusarium Wilt).* In some embodiments the plant protection mixture of the invention is used against *Fusarium oxysporum f.sp. cubense* (TR4, Panama disease). In some embodiments the plant protection mixture of the invention used against *Fusarium oxysporum* f.sp. *cubense* (TR4, Panama disease) comprises *G. Manihotis* and *G. Deserticola.* In some embodiments the plant protection mixture of the invention is used for providing protection to a plant against *F. oxysporum* f. sp. *radicis-cucumerinum.* In some embodiments the plant protection mixture of the invention used for providing protection against *Fusarium oxysporum* f.sp. *radicis-cucumerinum* comprises *G. Manihotis* and *G. Deserticola.*

The term *"treating"* as used herein refers to the administering of a protective effective amount of the composition of the present invention which is effective to ameliorate undesired symptoms associated with a disease, to prevent the manifestation of such symptoms in a plant before they occur, to slow down the progression of the disease, slow down the deterioration of symptoms, to enhance the onset of remission period, slow down the irreversible damage caused in the progressive chronic stage of the disease e.g. reducing overall damage of plants and plant parts as well as losses in harvested fruits or vegetables caused by phytopathogens, to delay the onset of said progressive stage, to lessen the severity or cure the disease, to improve survival rate, to improve crop yield, to improve crop quality, to improve plant physiology, to induce more rapid recovery, or to prevent the disease from occurring or a combination of two or more of the above. The *"effective amount"* for purposes disclosed herein is determined by such considerations as may be known in the art. The amount must be effective to achieve the desired fungicidal curative or protective effect as described above, depending, inter alia, on the type and severity of the disease to be treated and the treatment regime. The effective amount is typically determined in appropriately designed field trials (dose range studies) and the person versed in the art will know how to properly conduct such trials in order to determine the effective amount.

Improving plant physiology may be manifested by any one of the following effects:

- Abiotic stress tolerance, comprising for example temperature tolerance, drought tolerance and recovery after drought stress, water use efficiency (correlating to reduced water consumption), flood tolerance, ozone stress and UV tolerance, tolerance towards chemicals like heavy metals, salts, and pesticides (i.e. wherein the mixture or composition of the invention exhibits safener properties).

- Biotic stress tolerance, comprising increased fungal resistance and increased resistance against nematodes, viruses and bacteria. In context with the present invention, biotic stress tolerance preferably comprises increased fungal resistance.

- Increased plant vigor, comprising plant health / plant quality and seed vigor, reduced stand failure, improved appearance, increased recovery, improved greening effect and improved photosynthetic efficiency. Effects on plant hormones or functional enzymes.

- Effects on growth regulators (promoters), comprising earlier germination, better emergence, more developed root system or improved root growth, increased ability of tillering, more productive tillers, earlier flowering, increased plant height or biomass, shorting of stems, improvements in shoot growth, number of kernels/ear, number of ears/m$^2$, number of stolons or number of flowers, enhanced harvest index, bigger leaves, less dead basal leaves, improved phyllotaxy, earlier maturation/earlier fruit finish, homogenous ripening, increased duration of grain filling, better fruit finish, bigger fruit/vegetable size, sprouting resistance and reduced lodging.

- Increased yield, referring for example to total biomass per hectare, yield per hectare, kernel/fruit weight, seed size or hectoliter weight as well as to increased product quality, comprising: improved processability relating to size distribution (kernel, fruit, etc.), homogenous ripping, grain moisture, better milling, better vinification, better brewing, increased juice yield, harvestability, digestibility, sedimentation value, falling number, pod stability, storage stability, improved fiber length/strength/uniformity, increase of milk or meat quality of silage fed animals, adaption to cooking and frying; further comprising improved marketability relating to improved fruit/grain quality, size distribution (kernel, fruit, etc.), increased storage / shelf-life, firmness / softness, taste (aroma, texture, etc.), grade (size, shape, number of berries, etc.), number of berries/fruits per bunch, crispness, freshness, coverage with wax, frequency of physiological disorders, color, etc.; further comprising increased desired ingredients such as e.g. protein content, fatty acids, oil content, oil quality, amino-acid composition, sugar content, acid content (pH), sugar/acid ratio (Brix), polyphenols, starch content, nutritional quality, gluten content/index, energy content, taste, etc.; and further comprising decreased undesired ingredients such as e.g. less mycotoxines, less aflatoxines, geosmin level, phenolic aromas, lacchase, polyphenol oxidases and peroxidases, and nitrate content.

- Sustainable agriculture, comprising for example nutrient use efficiency (especially of nitrogen and phosphorus), water use efficiency, improved transpiration, respiration or $CO_2$ assimilation rate, better nodulation, improved Ca-metabolism.

- Delayed senescence, comprising improvement of plant physiology, which is manifested, for example, in a longer grain filling phase, leading to higher yield, a longer duration of green leaf coloration of the plant and thus comprising color (greening), water content, dryness etc. Accordingly, in the context of the present invention, it has been found that the specific inventive application of the active compound combination makes it possible to prolong the green leaf area duration, which delays the maturation (senescence) of the plant. The main advantage to the farmer is a longer grain filling phase leading to higher yield. There is also an advantage to the farmer based on greater flexibility in the harvesting time.

The terms *"more developed root system"* or *"improved root growth"* refer to longer root system, deeper root growth, faster root growth, higher root dry/fresh weight, higher root volume, larger root surface area, bigger root diameter, higher root stability, more root branching, higher number of root hairs, or more root tips and can be measured by analyzing the root architecture with suitable methodologies and Image analysis programs (e.g. WinRhizo) as known in the art.

The term *"nutrient-use efficiency"* refers technically to the mass of agriculture produce per unit nitrogen and/or phosphorus consumed and economically to the value of product(s) produced per unit nitrogen consumed, reflecting uptake and utilization efficiency. Improvement in greening / improved color and improved photosynthetic efficiency as well as the delay of senescence can be measured with well-known techniques such as a HandyPea system (Hansatech).

The term *"fungicide"* refers herein to a substance that kills fungi or retards the growth of fungal spores.

Generally, the mass production of mycorrhizal fungi can be realized by a substrate-based production method, a substrate-free production method, and an in-vitro production method.

In the substrate-based production method, the plants and their associated symbionts are cultivated in a soil sand-based substrate, or any other based substrate. After initial production of fungal inoculums, the fungi can be propagated for mass multiplication by using a single species or consortium of identified fungal species in pots or scaled up to medium sized bags and containers and large raised or grounded beds. The starter inoculums usually consist of a single or a consortium of spores and infected root segments. To prepare the after inoculums, the root segments are dried and ground into fine particles to obtain mixed inoculums while wet sieving and decanting techniques are used to obtain single spores.

In the substrate-free production method, a nutrient solution is aerated through an aeration pump to minimize amount of roots suffering from oxygen deprivation. The aerated nutrient solution is then used as a flow which covers the roots of a host plant which has been inoculated with the mycorrhizal fungi or alternatively, the inoculated roots are grown in a hydroponic system (aeroponic) and the nutrient solution is sprayed in the form of micro-droplets on the roots of the host plant.

In *in-vitro* production system, root organ can be cultured in small containers comprising the roots and the mycorrhizal fungi which were grown in Petri dishes or in large volume bags, to which nutrient the solution is periodically or continuously added.

## Plants

The mixture or composition of the invention can be applied to a variety of plants. The plants can belong for example to fruit crops, vegetable crops, ornamental crops (e.g. flowers), herbal crops, row crops (e.g. corn, soybean, wheat), or utility crops (e.g. hemp, cotton).

In some embodiments, the mixture is for use for protecting a plant against *Fusarium,* treating a plant infected by *Fusarium* or ameliorating damage to a plant caused by *Fusarium* and the plant is an agricultural plant.

In some embodiments, the agricultural plant is a member of a family selected from Asteraceae, Cucurbitaceae, Fabaceae, Solanaceae, Poaceae and Gramineae.

In some embodiments, the agricultural plant is a member of a genus selected from Cucurbita, Lagenaria, Citrullus, Cucumis, Momordica and Allium.

In some embodiments, the agricultural plant selected from squash, pumpkin, zucchini, cucumber, luffa, melon, calabash, watermelon, melon, alfalfa, clover, beans, peas, chickpeas, lentils, lupins, mesquite, carob, soybeans, peanuts, tamarind, onion, garlic, scallion, shallot, leek and chives, potato, tomato, eggplant, capsicum, chili peppers, bell peppers, sorghum, maize, wheat, rice, barley and millet.

In some embodiments, the agricultural plant selected from banana, avocado, mango, citrus, apple, plum, cherries, peach, apricot and almond.

In some embodiments, the agricultural plant is selected from cucumber, pumpkin, lettuce, onion, garlic, tomato, potato, and banana.

In some embodiments, the agricultural plant is cucumber.

In some embodiments the plant is a decorative plant, and the decorative plant is selected from grass and garden plants. The grass can be grass for lawns, golf courses, and sport fields such as tennis, football (soccer) and American football fields.

## Composition

The invention provides in another aspect a plant protection composition comprising a protective effective amount of the plant protection mixture of the invention, and at least one of an agriculturally acceptable adjuvant and an agriculturally acceptable carrier of the plant protection mixture. The composition may also be referred to as an inoculant.

The plant protection compositions may be formulated to be compatible for applying the composition to the roots, seeds or locus of plants for the control of various fungi. The plant protection composition is applied in the form of any of the commonly used form as appropriate for the particular application, e.g., as solutions, dusts, granules, wettable powders, flowable concentrates, or suspension concentrates. These compositions are conveniently applied in any method available in the art.

The term *"locus"* refers herein to the volume of soil in which a plant to be protected is planted and expected to develop its root system.

The composition may be formulated as a granular formulation, which is particularly useful for applications to the soil. The term *"granular formulation"* usually contain from about 0.05% to about 2% by weight of the active material, based on the total weight of the granular formulation, dispersed in a carrier which consists entirely or in large part of coarsely divided attapulgite, bentonite, clay zeolite, vermiculite, diatomaceous earth, humic acid, or a similar inexpensive substance. Such formulations can be prepared by mixing the mycorrhizal fungi propagules in a commercial mixer followed by mixing the ground propagules in a concrete mixer or V shape mixer that mixes the components to obtain a granular carrier which has been ground and size fractioned to the appropriate particle size, in the range of from about 0.1 mm to about 2 mm. The person of skill in the art would know which mixer to select according to the batch size. Such formulations may also be prepared by making a dough or paste of the carrier and the composition, and crushing and drying to obtain the desired granular particle.

The concentration of total viable spores of mycorrhizal fungi in the composition depends on the concentration in the mixture and the amount of carrier to which the mixture is added. The exact concentration can be determined by routine field experiments as customary in the art.

In some embodiments, the composition is formulated as a concentrate for preparation of an aqueous suspension. The concentrate may contain the mycorrhizal fungi particles in an appropriate carrier such as diatomaceous earth, humic acid and clay zeolite, maltodextrin and mannitol. Other optional formulations may include but are not limited to liquid formulations, wettable powder formulations, flakes formulations, oil dispersions, emulsion concentrates and water dispersible granules.

In some embodiments, the plant protection composition is applied to seeds of a plant as a seed coating composition. The term *"seed coating"* refers herein to applying the active ingredients according to the invention (e.g., the plant protection mixture of the plant protection composition) to the seeds either by impregnating the seeds in a liquid formulation (in a suspension comprising suspended propagule particles) or by coating them with a solid formulation (e.g.,

by using a planter box). The seeds may be covered with 0.1 - 30 viable spores/seed. It is possible to have less than one spore per seed by applying a composition comprising a total count of spores being smaller than the number of seeds. In certain crops, such as wheat, the composition is effective even when applied to the wheat seeds at a rate of 1 viable spore per 2 seeds of wheat. Thus, in some embodiments, the seeds are covered with 0.5-30 viable spores/seed. In some embodiments, the seeds are covered with 1-100 viable spores/seed. In some embodiments, the seeds are covered with 5-25 viable spores/seed. In some embodiments, the seeds are covered with 10-20 viable spores/seed. In some embodiments, the seeds are covered with 5-15 viable spores/seed. In some embodiments, the seeds are covered with 0.1, 0.5, 1, 3, 4, 5, 6, 7, 8, 9, 10, 11, 12, 13, 14, 15, 16, 17, 18, 19, 20, 21, 22, 23, 24, 25, 26, 27, 28, 29 or 30 viable spores/seed.

In some embodiments, the plant protection composition is applied to seeds of a plant as a soil mixing composition (soil mix). The term *"soil mixing"* refers herein to applying the composition comprising the active ingredients according to the invention (e.g., the plant protection mixture of the plant protection composition) to the growth media or the soil in which the seed is seeded. The composition is added either by mixing the composition into the total volume of growth media or by mixing the composition into the upper layer of the soil. The soil or growth media may be mixed with 3-30 viable spores per gram of composition and the seeds are seeded in the soil or growing media containing the soil mix. In some embodiments, the seeds are mixed with growth media comprising 5-25 viable spores/g (5-25 viable spores per gram of composition). In some embodiments, the seeds are mixed with growth media comprising 10-20 viable spores/g of composition. In some embodiments, the seeds are covered with 5-15 viable spores/g of composition. In some embodiments, the seeds are covered with 3, 4, 5, 6, 7, 8, 9, 10, 11, 12, 13, 14, 15, 16, 17, 18, 19, 20, 21, 22, 23, 24, 25, 26, 27, 28, 29 or 30 viable spores/g of growth substrate

In some embodiments, the plant protection composition is applied to seeds of a plant or for transplants as an in-furrow composition. The term *"in-furrow"* refers herein to applying the active ingredients according to the invention (e.g., the plant protection mixture of the plant protection composition) to the growth media in which the seeds are seeded or transplants are planted. The plant protection composition is applied to the growth media either by mixing dry formulation into the upper layer of growth media or by mixing a wettable mycorrhizal formulation with water to obtain a suspension and spraying the suspension on the growth substrate. The growth media may be mixed with the plant protection composition to obtain a concentration of 0.1-30 viable spores/g of composition (0.1-30 viable spores per gram of composition). In some embodiments, the seeds are seeded in a growth media containing 0.5-30 viable spores/g. In some embodiments, the seeds are seeded in a growth media containing 0.1-100 viable spores/g. In some embodiments, the seeds are seeded in growth media containing 5-25 viable spores/g. In some embodiments, the seeds are seeded in a growth media containing 10-20 viable spores/g. In some embodiments, the seeds are seeded in a growth media containing 5-15 viable spores/g. In some embodiments, the seeds are seeded in a growth media containing 3, 4, 5, 6, 7, 8, 9, 10, 11, 12, 13, 14, 15, 16, 17, 18, 19, 20, 21, 22, 23, 24, 25, 26, 27, 28, 29 or 30 viable spores/g of growth substrate.

The composition may also be formulated to contain agriculturally acceptable adjuvant surfactants to enhance deposition, wetting and penetration of the composition onto the target crop. These adjuvant surfactants may optionally be employed as a component of the formulation or as a tank mix. The amount of adjuvant surfactant will vary from 0.01 percent to 1.0 percent volume per volume (v/v) based on a spray-volume of water, in some embodiments 0.05 to 0.5 percent. Suitable adjuvant surfactants include ethoxylated nonyl phenols, ethoxylated synthetic or natural alcohols, salts or polymers of the esters or sulfosuccinic acids, ethoxylated organosilicones, ethoxylated fatty amines and blends of surfactants with mineral or vegetable oils.

As the quantification of propagules might be inconsistent and dependent on particle size of the propagule after grinding, shredding or cutting of the propagule source and the ability to characterize viable infecting propagules is limited, the composition is better characterized by number of viable spores per gram of composition. It is generally assumed in the context of this invention that there are about 1000 viable spores per 2500 propagule units, but this ratio may vary case by case. This number can be determined by using the aforementioned MTT (Thiazolyl Blue Tetrazolium Bromide) standard protocol. However, it is appreciated that different methods of production of propagules and different methods of quantifying the number of viable spores per propagule may results in different values. Therefore, the characterization of the composition according to the number of viable spores per weight of composition using the aforementioned MTT (Thiazolyl Blue Tetrazolium Bromide) standard protocol normalizes these differences.

In some embodiments, the plant protection mixture comprises G. *manihotis* and G. *deserticola* in a combined concentration of at least 1200 viable spores/g (i.e., 1200 viable spores per gram of mixture/carrier). In some embodiments, the plant protection mixture comprises G. *manihotis* and G. *deserticola* in a combined concentration of at least 2500 viable spores/g. In some embodiments, the plant protection mixture comprises G. *manihotis* and G. *deserticola* in a combined concentration of at least 6000 viable spores/g. In some embodiments, the plant protection mixture comprises G. *manihotis* and G. *deserticola* in a combined concentration of at least 10000 viable spores/g. The composition may be characterized by the total amount of mycorrhizal fungi present in a concentration of between 250 to 10,000 viable spores/g. The composition may be characterized by the total amount of viable spores of mycorrhizal fungi present in one gram of the composition, e.g., the composition may have a concentration of 250, 500, 1000, 2000, 3000, 4000, 5000, 6000, 7000, 8000, 9000 or 10,000 viable spores/g. The composition may comprise ground roots characterized by a particle size of between 38 μm to 1000 μm and comprising 200-70000 viable spores/g. The composition may comprise G. *manihotis* and *G. deserticola* in a combined concentration of the two mycorrhizal fungi of at least 2500 spores/g.

When the composition is formulated as a liquid, such as a liquid suspension, the concentration of viable spores of mycorrhizal fungi present in one ml of the composition can be between 250 to 10,000 viable spores/ml. In some embodiments - 250, 500, 1000, 2000, 3000, 4000, 5000, 6000, 7000, 8000, 9000 or 10,000 viable spores/ml. The composition may comprise G. *manihotis* and *G. deserticola* in a combined concentration of the two mycorrhizal fungi of at least 2500 spores/ml. The composition may be formulated as a suspension concentrate having high concentration values and diluted with water to form a suspension of a desired value before applying the composition.

In some embodiments, the composition comprises at least one chemical fungicide in addition to the mycorrhizal fungi. The at least one fungicide can belong to a fungicide family (chemical class) selected from methyl benzimidazoles, carboxamides, dicarboximides, methoxy-acrylates, imidazoles, phenylpyrroles, strobilurins, triazoles, salts of phosphorous acid, salts of sulfonic acid or mixtures thereof. The fungicide can be at least one of boscalid, initium®, F500®, dithiocarbamate, morpholine thiophanate-methyl, iprodione, azoxystrobin, kresoxim-methyl, picoxystrobin, fluoxastrobin, oryzastrobin, dimoxystrobin, pyraclostrobin and trifloxystrobin, prochloraz, fludioxonil and tebuconazole copper salt, zinc salt, potassium salt and dipotassium salts of phosphorous acid, copper sulfate, and Xemium®.

In some embodiments the composition comprises as active ingredients for protecting a plant only mycorrhizal fungi and is free of chemical fungicides.

## Kit

The composition of the invention can be provided to the grower in the form of a kit comprising the plant protection composition of the invention. The composition can be provided as a final formulation such as powder mixture or liquid formulation in a carrier or as a pro-formulated mixture to be formulated by the user before application such as a ground propagule powder or a concentrate to be added to a prescribed amount of water for preparing a suspension of mycorrhizal fungi. The kit may further include additives, such as a fungicide, in a separate container to be administered to the plants to be protected concomitantly with or separately from the propagule powder. The kit may further include instructions for formulating and/or applying the composition to the plants according the method of the invention.

In some embodiments, the kit comprises fungicides belonging to a fungicide family (chemical class) selected from strobilurins, methyl benzimidazoles, dicarboximides, methoxy-acrylates, imidazoles, phenylpyrroles, triazoles, salts of phosphorous acid, salts of sulfonic acid or mixtures thereof. The fungicide can be at least one of dithiocarbamate, , morpholine thiophanate-methyl, iprodione, azoxystrobin, kresoxim-methyl, picoxystrobin, fluoxastrobin, oryzastrobin, dimoxystrobin, pyraclostrobin and trifloxystrobin, prochloraz, fludioxonil, tebuconazole, copper salt, zinc salt, potassium salt and dipotassium salts of phosphorous acid, copper sulfate, Xemium®. boscalid, initium®, and F500®.

The fungicide and the mycorrhizal fungi can be stored separately in different packages or as a combined composition comprising the mycorrhizal fungi and the chemical fungicide.

## Method

In another aspect, the invention provides a method for protecting a plant from a fungal pathogen attack, wherein the method comprises applying a protective effective amount of the plant protection composition of the invention to at least one of the following: (i) a plant propagation material of a plant; (ii) a locus in which fungal infestation is to be prevented or controlled, (iii) a plant or plant part; and (iv) a growth substrate.

The term *"protecting a plant from a fungal pathogen attack"* means the prevention or control of a fungal pathogen attack on a plant.

The term *"plant part"* refers herein to protoplasts, leaves, stems, roots, root tips, anthers, pistils, seed, grain, embryo, pollen, ovules, cotyledon, hypocotyl, pod, flower, shoot, tissue, petiole, cells, meristematic cells, and the like.

In some embodiments the method is for protecting a plant against *Fusarium,* treating a plant infected by *Fusarium* or ameliorating damage to a plant caused by *Fusarium.* In some embodiments the plant protection mixture of the invention is used against *F. oxysporum* f. sp. *radicis-cucumerinum.*

The method of plant protection is directed to a variety of plants. The plants can belong for example to fruit crops, vegetable crops, ornamental crops (e.g., flowers), row crops, herbal crops, or utility crops (e.g., hemp, cotton).

In some embodiments, the method is for protecting a plant against *Fusarium,* treating a plant infected by *Fusarium* or ameliorating damage to a plant caused by *Fusarium* and the plant is selected from an agricultural plant or a decorative plant.

In some embodiments, the agricultural plant is a member of a family selected from Asteraceae, Cucurbitaceae, Fabaceae, Solanaceae, Poaceae and Gramineae.

In some embodiments, the agricultural plant is a member of a genus selected from Cucurbita, Lagenaria, Citrullus, Cucumis, Momordica and Allium.

In some embodiments, the agricultural plant selected from squash, pumpkin, zucchini, cucumber, luffa, melon, calabash, watermelon, melon, alfalfa, clover, beans, peas, chickpeas, lentils, lupins, mesquite, carob, soybeans, peanuts, tamarind, onion, garlic, scallion, shallot, leek and chives, potato, tomato, eggplant, capsicum, chili peppers, bell peppers, sorghum, maize, wheat, rice, barley and millet.

In some embodiments, the agricultural plant selected from banana, avocado, mango, citrus, apple, plum, cherries, peach, apricot and almond.

In some embodiments, the agricultural plant is selected from cucumber pumpkin, lettuce, onion, garlic, tomato, potato, and banana.

In some embodiments the decorative plant is selected from grass and garden plants. The grass can be grass for lawns, golf courses, and sport fields such as tennis, football (soccer) and American football fields.

In some embodiments, the plant protection composition is applied to the plant in combination with a fungicidal treatment comprising applying a fungicidal active ingredient to the plant. The application of the plant protection mixture and the fungicide may take place concomitantly or separately. The fungicide can be a mixture of two or more fungicide active ingredients at various ratios. When applying a combination of mycorrhizal fungi and at least one of a fungicide and an adjuvant, the application may result in additive effect, synergistic effect or act as safener to ameliorate the harmful side effect that the fungicide active ingredient might exhibit if it is applied alone. In particular, the combination application of the plant protection composition and fungicide may thus exhibit a synergistic protective effect with respect to a protective effect exhibited by the mycorrhizae and the fungicide administered separately to a plant.

The fungicides that may be applied in combination with the plant protection composition can comprise a fungicide of a fungicide family (chemical class) selected from strobilurins, methyl benzimidazoles, dicarboximides, methoxy-acrylates, imidazoles, phenylpyrroles, triazoles, salts of phosphorous acid, salts of sulfonic acid or mixtures thereof.

The fungicide can be at least one of dithiocarbamate, morpholine thiophanate-methyl, iprodione, azoxystrobin, prochloraz, fludioxonil and tebuconazole,

dithiocarbamate, morpholine, thiophanate-methyl, iprodione, azoxystrobin, kresoxim-methyl, picoxystrobin, fluoxastrobin, oryzastrobin, dimoxystrobin, pyraclostrobin and trifloxystrobin, prochloraz, fludioxonil, tebuconazole, copper salt, zinc salt, potassium salt and dipotassium salts of phosphorous acid, copper sulfate, Xemium®. boscalid, initium®, and F500®.

The plant protection composition of the invention can also be applied to the plant in combination with other commonly used plant protection compositions or agents such as minerals, fungi and bacteria. Exemplary minerals which may show protective effect against fungal attack on plants are copper salts, zinc salts, potassium salts and dipotassium salts of phosphorous acid and copper sulfate.

In some embodiments, the plant protection composition and the mineral are applied together with a metal chelate such as copper EDTA (Ethylenediaminetetraacetic acid), or copper EDDHA (ethylenediamine-di-o-hydroxyphenylacetic acid).

The combination application of the plant protection composition and other commonly used plant protection compositions or agents may thus exhibit a synergistic protective effect with respect to a protective effect exhibited by the mycorrhizae and the fungicide administered separately to a plant.

Synergistic effect can be determined by making comparison to the expected additive effect derived from Colby's equation to determine the protective effects expected from the mixtures. An observed effect being higher than the expected effect is considered to be synergistic. The larger the difference between the observed effect and the calculated effect, the stronger is the synergistic effect. (See Colby, S. R. "Calculation of the synergistic and antagonistic response of herbicide combinations", Weeds 1967, 15, 20-22.)

The following equation was used to calculate the expected activity of mixtures containing two active ingredients, A and B:

$$Expected = A + B - (A \times B / 100)$$

A=observed efficacy of active component A at the same concentration as used in the mixture;

B=observed efficacy of active component B at the same concentration as used in the mixture.

According to the method, the composition may be administered in a wide variety of dosages depending on the type of plant, the type of ground in the locus of the plant, the season, weather conditions, development stage of the plant and the type of pathogen the plant is supposed to be protected against. The composition may be applied in a dosage which will result in application of between 0.1 to 5,000 viable spores of mycorrhizal fungi per plant. In some embodiments, the composition is applied in a dosage of 0.5 to 5,000, 3 to 2,000, 100 to 1000, 200 to 600, 300 to 700, 500 to 1500, 1000 to 2000, 1500 to 3500 or 1000 to 5000 viable spores of mycorrhizal fungi per plant. In some embodiments, the composition is applied in a dosage of 100, 200, 300, 400, 500, 800, 1000, 1500, 2000, 2500, 3000, 4000 or 5000 spores of mycorrhizal fungi per plant.

According to the method, the composition can be applied to the plant at least once at a time selected from prior to seeding of the plant, during seeding of the plant, and between 8 to 12 days after seeding of the plant. In some embodiments, the composition can be applied 9 to 11 days after seeding and in a further embodiment the composition can be applied 10 days after seeding. When applied prior to the seeding of the plant, the mycorrhizal fungi composition can be mixed at the locus of the expected seeding or planting of the plan or its propagating material (e.g., seed) on the same day of planting, between 1-30 days prior to planting, a day before planting, a couple of days prior to planting, several days prior to planting, a week, two weeks, three weeks or between three to four weeks prior to planting. The plant protection composition can be applied to the plant during the time it is grown in a nursery, prior to the planting of the seedling in the field.

The method may include applying the plant protection composition in various ways which are commonly used for inoculating plants with mycorrhizal fungi. The plant protection compositions may be applied to the roots, seeds or locus of plants for the control of various fungi. The plant protection composition is applied in the form of any of the commonly used forms as appropriate for the particular application, e.g., as solutions, granules, dusts, wettable powders, flowable concentrates, or suspension concentrates. These formulations are conveniently applied by any method available in the art.

In some embodiments of the method, the plant protection composition can be applied in the form of a liquid, usually an aqueous suspension, as detailed earlier, by irrigation of the plants with the water admixed with a suspension (e.g., a suspension concentrate of the composition of the invention). The irrigation can take any form applicable in the art such as micro-irrigation (e.g., drip irrigation), flood irrigation (e.g., drenching), sprinkler irrigation, subirrigation, etc.

The composition can be applied to the plants by soaking exposed roots of plants in an aqueous propagule suspension of the composition or by spraying the propagule suspension on the exposed roots. After applying the propagule suspension to the roots, the plant can be immediately planted or first allowed to dry before it is planted.

The liquid formulations can be applied by to at a concentration

The method may include applying the composition in the form of powder to the plant by dusting the plant roots, bulbs or tubers.

In other embodiments the composition is applied in a solid form such as granules or powder to the locus of the plant by mixing the composition in the soil, at effective concentrations.

In some embodiments, the propagation material is seeds of the plant to be protected against a fungal attack. The method comprises applying the composition to the seeds by seed coating.

When protecting cucumber against *fusarium oxysporum* f.sp. *radicis-cucumerinum* (FORC), the composition can be administered in a dosage resulting in inoculating a plant with about 50, 100, 200, 300, 400, 500, 600, 700, 800, 900 or 1000 spores of mycorrhizal fungi. The earlier the plant protection composition is applied to the locus or to the protected plant, the lower the required effective dosage. EP is because the mycorrhizal fungi would have a longer period to effectively inoculate the plant and provide protection to the plant against the pathogen.

Seeds

In another aspect, the invention provides a seed coated with the plant protection composition and a corresponding mixture comprising a plurality of such seeds. The seeds in the mixture may be averagely coated with 0.130- viable spores/seed. In some embodiments, the seeds are averagely coated with 5-25 viable spores/seed. In some embodiments, the seeds are averagely coated with 10-20 viable spores/seed. In some embodiments, the seeds are averagely coated with 5-15 viable spores/seed. In some embodiments, the seeds are averagely coated with 3, 4, 5, 6, 7, 8, 9, 10, 11, 12, 13, 14, 15, 16, 17, 18, 19, 20, 21, 22, 23, 24, 25, 26, 27, 28, 29 or 30 viable spores/seed. The average coating is calculated by dividing the approximated number of spores by the approximated number of seeds.

**EXAMPLES**

**Example 1**

Roots of *Sorghum bicolor* inoculated with *G. manihotis* were grown in sand. After 16 weeks, the spores, roots and hyphae were harvested, the sand was washed and after partial air drying the remaining roots and hyphae were ground in a knife grinder to obtain propagule particles. The propagule particles were fractioned to ranges of particle sizes using a tandem filtration through different mesh sizes. Propagule particles having a particle size of between 38 $\mu$m to 250 $\mu$m were obtained. A sample from these particles was dyed with MTT to determine the concentration of viable spores/gram as explained above. An amount of 0.5 Kg of the propagule particles equivalent to provide 2500 viable spores/gr in the final composition were admixed in a concrete mixer with 50 Kg of ground diatomite to obtain a granular plant protection composition comprising *G. manihotis* in a concentration of 2500 viable spores/gr in the final composition.

The same procedure was performed *mutatis mutandis* for preparing the mycorrhiza I fungus compositions of *G. deserticola, G. intraradices* and *G. mosseae.*

Compositions comprising mixtures of mycorrhizal fungi were prepared by mixing relative amounts of the compositions comprising a single mycorrhizal fungus.

Mixtures of mycorrhizal fungi comprising various relative concentration ratios were prepared.

**Example 2**

The effect of treatments with mycorrhizal fungi compositions on cucumber plants 28 days after inoculation (DAI) with the mycorrhizal fungi and without infecting with *Fusarium oxysporum* f.sp. *radicis-cucumerinum* (FORC) was tested as follows:

Plant protection compositions of mycorrhizal fungi prepared according to Example 1 having a concentration of 2500 propagules/gr were admixed in cocopeat soil in a quantity corresponding to 1000 viable spores per plant. Cucumber seeds, sensitive to Fusarium, were planted in the treated soil and grown for 21 days under commercial nursery conditions in a tray containing 171 cells of 30 ml in a greenhouse. On day 21 after seeding, 12 groups of seedlings, each containing 75 cucumber plants were planted in 25 pots of 1.5 L (3 plants per pot) and irrigated with 650 ml per pot, 20 min/day total (2 L/h) in a greenhouse. The pots were fertilized with 300 gr/1000m$^2$ of 18-18-18 NPK fertilizer pump 0.2% (10.3 Kg/30L).

The ingredient ratios in each composition are presented in **Table 1**. The experimental results of treatment with each composition are summarized in * Small fruit calculated as average weight of 1.28 g

*Table 2.*

| Mycorrhizal fungus \ Composition No. | 1 | 2 | 3 | 4 | 5 | 6 | 7 | 8 | 9 | 10 | 11 | 12 |
|---|---|---|---|---|---|---|---|---|---|---|---|---|
| *G. intraradices* | 0 | 60 | 80 | 25 | 0 | 0 | 20 | 20 | 100 | 0 | 0 | 0 |
| *G. mosseae* | 0 | 20 | 10 | 25 | 0 | 0 | 40 | 40 | 0 | 100 | 0 | 0 |
| *G. deserticola* | 0 | 10 | 5 | 25 | 50 | 30 | 40 | 0 | 0 | 0 | 100 | 0 |
| *G. manihotis* | 0 | 10 | 5 | 25 | 50 | 70 | 0 | 40 | 0 | 0 | 0 | 100 |

*Table 1.* *Mycorrhizal fungi compositions 1 -12 by percentage out of the total amount of viable spores per gr.*

The control group received treatment with composition 1 which included only the carrier (vermiculate).

Compositions 2-4 are quaternary compositions comprising all four species of arbuscular fungal mycorrhizae *G. intraradices, G. mosseae, G. deserticola* and *G. manihotis* at different ratios, 60:20:10:10 (composition 2), 80:10:5:5 (composition 3) 25:25:25:25 (composition 4).

Compositions 5 and 6 contain binary mixtures of *G. deserticola and G. manihotis,* 50:50 and 30:70, respectively.

Compositions 7-8 are tertiary mixtures of 20:40:40 *G. intraradices, G. mosseae* and *G. deserticola* (composition 7) and 20:40:40 *G. intraradices, G. mosseae* and *G. manihotis* (composition 8).

Compositions 9-12 each contain a single mycorrhizal species - *G. intraradices* (composition 9), *G. mosseae* (composition 10), *G. deserticola* (composition 11) *and G. manihotis* (composition 12).

The only treatment with a single species of mycorrhizal fungus composition that obtained a better yield compared to the control was with *G. deserticola,* which obtained 84 fruits with a total weight of 6.7 Kg *vs.* 82 fruits with a weight of 5.7 Kg in the control group. On the other hand, treatment with composition 11 had a yield of 230 small fruits with a weight of 0.3 Kg *vs.* 378 small fruits with a weight of 0.49 Kg in the control.

It is noted that small fruits have a potential of growing into larger fruits thus they are considered as potential for large fruit yield at a later stage (i.e., potential yield).

While application of the binary composition of *G. deserticola and G. manihotis* 30:70 (composition 6) exhibited similar results to the control, application of the 50:50 binary composition (composition 5) resulted in a higher yield (99 fruits in a total weight of 7.9 Kg) as well as a higher potential yield of small fruits.

Treatment with composition 4 showed the best quaternary combination treatment with 25% each. Treatment 4 had a yield of 96 fruits in a total weight of 7.7 Kg. In addition, treatment 4 had a yield potential of 316 small fruits with a weight of 0.41 Kg. The average fruit weight was higher in treatments 4, 5 and 11 than the control. The 1:1 presence of *G. deserticola and G. manihotis* in the quaternary composition 4 and the results obtained by treatment with composition 5 indicate a synergistic behavior of the binary combination *G. deserticola and G. manihotis* with the ratio of 1:1.

The results demonstrate that the application of binary *G. deserticola/ G. manihotis* 1:1 obtains a synergistic improvement in all parameters of crop yield in *fusarium-free* cucumber plants. Other compositions comprising at least one out of *G. intraradices, G. mosseae, G. deserticola and G. manihotis* demonstrated improvements in some parameters but less or even a decline in other parameters.

*Table 2 the effect of mycorrhizal treatments 28 DAI on the yield of Cucumber plants without Fusarium.*

| Composition No. | Disease incidence (%) | Disease severity | Small fruit yield (kg) | Small fruit* (num.) | Fruit yield (kg) | Fruit (num.) | Avg. fruit weight (g) |
|---|---|---|---|---|---|---|---|
| 1 (control) | 0 | 0 | 0.49 | 378 | 5.7 | 82.0 | 69.9 |
| 2 | 0 | 0 | 0.41 | 320 | 5.2 | 59.0 | 87.5 |
| 3 | 0 | 0 | 0.39 | 300 | 4.4 | 55.0 | 80.0 |
| 4 | 0 | 0 | 0.41 | 316 | 7.7 | 96.0 | 80.2 |
| 5 | 0 | 0 | 0.56 | 433 | 7.9 | 99.0 | 79.6 |
| 6 | 0 | 0 | 0.51 | 398 | 5.5 | 77.0 | 71.8 |
| 7 | 0 | 0 | 0.36 | 277 | 4.6 | 70.0 | 66.2 |
| 8 | 0 | 0 | 0.25 | 191 | 3.0 | 58.0 | 51.2 |
| 9 | 0 | 0 | 0.30 | 234 | 3.5 | 76.0 | 45.4 |
| 10 | 0 | 0 | 0.35 | 269 | 5.1 | 73.0 | 70.1 |
| 11 | 0 | 0 | 0.30 | 230 | 6.7 | 84.0 | 80.2 |
| 12 | 0 | 0 | 0.31 | 242 | 4.2 | 79.0 | 53.5 |
| * Small fruit calculated as average weight of 1.28 g | | | | | | | |

## Example 3

The effect of treatments with mycorrhizal fungi compositions on cucumber plants 28 DAI which were infected with *Fusarium* was tested as follows and the results are summarized in **Table 3.** and demonstrated in **Figures 1 and 2.**

Plant protection compositions of mycorrhizal fungi prepared according to Example 1 having a concentration of 2500 viable spores/gr were admixed in cocopeat soil in a quantity corresponding to 1000 viable spores per plant. Cucumber seeds were put in the treated soil and grown for 21 days in a 30ml or 60ml pot in a greenhouse. On day 21, 13 groups of seedlings, each containing 75 cucumber seedlings were planted in 25 pots of 1.5 L (3 plants per pot) and irrigated with 650 ml per pot, 20 min/day total (2 L/h). The pots were fertilized with 300 gr/1000m$^2$ of 18-18-18 NPK fertilizer pump 0.2% (10.3 Kg/30L) in a greenhouse. At planting, the cucumber seedlings were inoculated with FORC by soaking the seedlings roots with a 500 ml of $1.2\times10^8$ spores/ml aqueous solution per 40 plants. After planting, 2 ml of FORC solution was added to each plant.

*Table 3. The effect of treatments with mycorrhizal fungi compositions on the disease incidence and severity and yield of Cucumber 28 DAI plants that have been infected with FORC.*

| Composition | Disease incidence (%) | Disease severity | Small fruit yield (kg) | Fruit yield (kg) | * Small fruit (num.) | Fruit (num.) | Avg. fruit weight (g) |
|---|---|---|---|---|---|---|---|
| 1 Control | 95.2 | 1.8 | 0.03 | 0.7 | 23 | 14.0 | 51.4 |
| 2 | 96.0 | 1.7 | 0.08 | 0.7 | 62 | 13.0 | 55.1 |
| 3 | 97.3 | 1.7 | 0.08 | 0.8 | 58 | 12.0 | 69.6 |

(continued)

| Composition | Disease incidence (%) | Disease severity | Small fruit yield (kg) | Fruit yield (kg) | * Small fruit (num.) | Fruit (num.) | Avg. fruit weight (g) |
|---|---|---|---|---|---|---|---|
| 4 | 84.0 | 1.4 | 0.07 | 2.7 | 55 | 35.0 | 77.3 |
| 5 | 65.3 | 1.0 | 0.02 | 3.1 | 16 | 44.0 | 69.9 |
| 6 | 46.7 | 1.0 | 0.08 | 2.0 | 62 | 31.0 | 65.6 |
| 7 | 77.3 | 1.4 | 0.05 | 0.9 | 39 | 15.0 | 63.0 |
| 8 | 80.0 | 1.5 | 0.05 | 1.5 | 39 | 23.0 | 66.1 |
| 9 | 92.0 | 1.7 | 0.05 | 2.0 | 39 | 7.0 | 285.7 |
| 10 | 78.7 | 1.3 | 0.10 | 1.2 | 74 | 19.0 | 64.5 |
| 11 | 92.0 | 1.7 | 0.08 | 0.7 | 58 | 10.0 | 73.0 |
| 12 | 88.0 | 1.6 | 0.02 | 1.5 | 16 | 14.0 | 105.7 |
| 13 | 81.3 | 1.5 | 0.06 | 0.9 | 43 | 16.0 | 59.1 |
| * Small fruit calculated as average weight of 1.28 g | | | | | | | |

The control group which was treated with a composition containing only the carrier had a yield of 14 fruits with a weight of 0.7 Kg and a yield potential of 23 small fruits with a in weight of 0.03 Kg.

All treatments with the tested compositions were either comparable or outperformed the control group in terms of yield, and all obtained an average fruit weight higher than the control.

Overall, all treatments with single species, namely compositions 9-12 had higher yields compared to the control.

Treatments with binary compositions 5 and 6 (*G. deserticola and G. manihotis, 50:50* and 30:70 respectively) also exhibited a better yield compared to the control.

Among treatments with quaternary compositions 2-4 treatment with composition 4 showed best results.

Disease incidence was determined by visual observation of the symptoms i.e., Collar rot, a white fungal growth on the affected tissue, vascular discoloration, progressive yellowing, wilt, canker, unilateral cracks with rots and plant death as described in Vakalounakis, D.J., Plant Disease 1996, 80, 313-316. Disease incidence of the control was 95.2%. Treatment with compositions 4, 7-12 exhibited lower incidence of the disease (88-92%) in comparison with control. Treatment with composition 5 exhibited better protection against FORC with incidence as low as 65.3%. The lowest disease incidence (46.7%) was obtained by treatment with composition 6 (binary combinations of *G. deserticola and G. manihotis* 50:50 and 30:70, respectively).

Disease severity index was determined by visual observation of the symptoms. Symptoms index defined as follows: 0 - none, 1 - moderate, 2- severe and death. Severity was determined as follow: asymptomatic plants were ranked as 0; low severity symptomatic plants i.e., unilateral cracks without rot, limited yellowing, limited wilt were ranked as 1; high severity symptomatic plants i.e., wilt, unilateral cracks with rots and death of plants were ranked as 2. The average symptoms index of the control was 1.8. Treatments with binary compositions 5 and 6 exhibited the lowest disease severity index of 1. Treatments with compositions 5 and 6 which comprised *G. deserticola and G. manihotis* with the ratio of 50:50 or 30:70, respectively both indicated synergistic behavior of. Treatments with composition 4 (*G. deserticola and G. manihotis* are present in a ratio of 25% each).

The results demonstrate that plant protection compositions comprising G. *deserticola* and *G. manihotis,* especially with ratios of 50:50 or 30:70, obtain synergistic protection against FORC in cucumber. The results also demonstrate that plant protection compositions comprising *G*. *deserticola* and *G*. *manihotis* in combination with at least one other mycorrhizal fungus selected from *G. intraradices* and *G. mosseae* obtain improved protection against FORC in cucumber. The results also demonstrate that compositions comprising the binary combination of *G. deserticola* and *G. manihotis* and compositions comprising *G. deserticola* and *G. manihotis* in combination with at least one other mycorrhizal fungi selected from *G. intraradices* and *G. mosseae* obtains higher crop yield in cucumber infected by FORC.

## Example 4

The optimal concentration ratio between *G. deserticola and G. manihotis* can be determined by conducting a field experiment following *mutatis mutandis* the experiment described in Example 3 using compositions having varied ratios between the two mycorrhizal fungi.

To assess the optimal total mycorrhizal concentration of *G. deserticola and G. manihotis,* a field experiment *mutatis mutandis* as the one described in Experiment 3, can be conducted using compositions with a wide range of total mycorrhizal concentrations of *G. deserticola and G. manihotis.*

To this end the following compositions summarized in **Table 4** can be prepared and tested:

| Composition No.<br>Mycorrhizal Fungus | 301 | 302 | 303 | 304 | 305 | 306 | 307 | 308 |
|---|---|---|---|---|---|---|---|---|
| *G. deserticola* | 0 | 0 | 10 | 30 | 50 | 70 | 90 | 100 |
| *G. manihotis* | 0 | 100 | 90 | 70 | 50 | 30 | 10 | 0 |

*Table 4 Mycorrhizal fungi compositions 301 -308 by percentage out of the total amount of viable spores per gr of the composition.*

**Claims**

1.  A plant protection mixture comprising a protective effective amount of mycorrhizal fungi of the species *G. manihotis* and *G. deserticola.*

2.  A method for protecting a plant against *Fusarium,* treating a plant infected by *Fusarium* or ameliorating damage to a plant caused by *Fusarium,* comprising use of the plant protection mixture according to claim 1.

3.  The method according to claim 2, wherein the plant is an agricultural plant being at least one of: (i) a member of a family selected from Asteraceae, Cucurbitaceae, Fabaceae, Solanaceae, Poaceae and Gramineae; (ii) a member of a genus selected from Cucurbita, Lagenaria, Citrullus, Cucumis, Momordica and Allium; (iii) selected from squash, pumpkin, zucchini, cucumber, luffa, melon, calabash, watermelon, alfalfa, clover, beans, peas, chickpeas, lettuce, lentils, lupins, mesquite, carob, soybeans, peanuts, tamarind, onion, garlic, scallion, shallot, leek and chives, potato, tomato, eggplant, capsicum, chili peppers, bell peppers, sorghum, maize, wheat, rice, barley and millet; (iv) a member of the Rosaceae family; and (v) selected from banana, avocado, mango, citrus, apple, plum, cherries, peach, apricot and almond.

4.  The plant protection mixture according to claim 1, further comprising at least one mycorrhizal fungus selected from *G. intraradices* and *G. mosseae.*

5.  The plant protection mixture according to claim 1 or claim 4, comprising mycorrhizal propagules in the form selected from ground roots of plants comprising *G. manihotis,* ground roots of plants comprising *G. deserticola,* ground hyphae of *G. manihotis,* ground hyphae of *G. deserticola,* spores of *G. manihotis,* spores of *G. deserticola* and mixtures thereof.

6.  The plant protection mixture according to claims 1, 4 or 5, comprising *G. manihotis* and *G. deserticola* in a concentration ration of between 1:99 to 99:1.

7.  The plant protection mixture according to claims 1 or 4 to 6, comprising 30% viable spores of the species *G. manihotis* out of the total number of viable spores of the species *G. manihotis* and *G. deserticola* in the mixture.

8.  A plant protection composition comprising a protective effective amount of the plant protection mixture according to claims 1 or 4 to 7 and at least one of: an agriculturally acceptable adjuvant and an agriculturally acceptable carrier.

9.  The plant protection composition according to claim 8, wherein at least one of the following holds true: (i) the carrier is selected from the group consisting of vermiculite, diatomaceous earth, humic acid, clay zeolite, maltodextrin and mannitol; (ii) the total mycorrhizal fungi is present in a concentration of between 250 to 10,000 viable spores/g; (iii) the combined concentration of all mycorrhizal fungi species in the composition is at a concentration of 2500 viable spores/g; (iv) the composition comprises ground roots **characterized by** a particle size of between 38 $\mu$m to 1000 $\mu$m and comprising 200-70000 viable spores/g; (v) the composition comprises G. *manihotis* and *G. deserticola* with a combined concentration of at least 2500 spores/g; and (vi) the composition further comprises a fungicide.

10. The plant protection composition according to claims 8 or 9, wherein the fungicide belongs to a fungicide family selected from methyl benzimidazoles, carboxamides, dicarboximides, methoxy-acrylates, imidazoles, phenylpyrroles, strobilurins, triazoles, salts of phosphorous acid, and salts of sulfonic acid; or selected from at least one of boscalid, ametoctradin, thiophanate-methyl, iprodione, azoxystrobin, kresoxim-methyl, prochloraz, fludioxonil, tebuconazole, copper salt, zinc salt, potassium salt and dipotassium salts of phosphorous acid, copper sulfate, picoxystrobin, fluoxastrobin, oryzastrobin, dimoxystrobin, pyraclostrobin, trifloxystrobin and Fluxapyroxad.

11. A method for protecting a plant from a fungal pathogen attack, wherein the method comprises applying a protective effective amount of the plant protection composition of claims 8 to 10 to at least one of:

    (i) a plant propagation material of a plant;
    (ii) a locus in which fungal infestation is to be prevented or controlled; and
    (iii) a plant or plant part.

12. The method according to claim 11, wherein at least one of the following holds true: (i) the fungal pathogen is fusarium; (ii) the plant is an agricultural plant; (iii) the plant is a member of a family selected from Asteraceae, Cucurbitaceae, Fabaceae, Solanaceae, Poaceae and Gramineae; (iv) the plant is a member of a genus selected from Cucurbita, Lagenaria, Citrullus, Cucumis, Momordica and Allium; (v) the plant selected from squash, pumpkin, zucchini, cucumber, luffa, melon, calabash, watermelon, melon, alfalfa, clover, beans, peas, chickpeas, lentils, lupins, mesquite, carob, soybeans, peanuts, tamarind, onion, garlic, scallion, shallot, leek and chives, potato, tomato, eggplant, capsicum, chili peppers, bell peppers, sorghum, maize, wheat, rice, barley and millet; (vi) the plant is a member of the Rosaceae family; and (vii) the plant is selected from banana, avocado, mango, citrus, apple, plum, cherries, peach, apricot and almond.

13. The method according to claims 11 or 12, wherein at least one of the following holds true: (i) the composition is applied at a dosage of 0.4 gram of 2500 viable spores/gram mycorrhizal fungi per plant; or at a dosage of 1000 spores of mycorrhizal fungi per plant; (ii) the composition is applied to the plant at least once at a time selected from prior to seeding of the plant, during seeding of the plant, and ten days after seeding of the plant; (iii) the composition is applied by an irrigation system; (iv) the composition is applied to the plant by dusting the plant roots, bulbs or tubers; and (v) the composition is applied to the plant separately from or concomitantly in combination with a fungicide.

14. The method according to claims 11 to 13 wherein the propagating material is a seed and the fungicide is at least one of the following: (i) belongs to a fungicide family selected from methyl benzimidazoles, carboxamides, dicarboximides, methoxy-acrylates, imidazoles, phenylpyrroles, strobilurins, triazoles, salts of phosphorous acid, and salts of sulfonic acid; (ii) is selected from at least one of boscalid, ametoctradin, thiophanate-methyl, iprodione, azoxystrobin, kresoxim-methyl, prochloraz, fludioxonil, tebuconazole, copper salt, zinc salt, potassium salt and dipotassium salts of phosphorous acid, copper sulfate, picoxystrobin, fluoxastrobin, oryzastrobin, dimoxystrobin, pyraclostrobin, trifloxystrobin and fluxapyroxad.

15. A seed coated with the composition as defined in claims 8 to 10.

**Patentansprüche**

1. Pflanzenschutzgemisch, umfassend eine schützende wirksame Menge von Mykorrhizapilzen der Spezies G. *manihotis* und G. *deserticola.*

2. Verfahren zum Schutz einer Pflanze gegen *Fusarium,* Behandeln einer mit *Fusarium* infizierten Pflanze oder Lindern einer durch *Fusarium* verursachten Schädigung einer Pflanze, umfassend Verwendung des Pflanzenschutzgemisches nach Anspruch 1.

3. Verfahren nach Anspruch 2, wobei die Pflanze eine landwirtschaftliche Pflanze ist, die mindestens eines von Folgendem ist: (i) ein Mitglied einer Familie, ausgewählt aus Asteraceae, Cucurbitaceae, Fabaceae, Solanaceae, Poaceae und Gramineae; (ii) ein Mitglied einer Gattung, ausgewählt aus Cucurbita, Lagenaria, Citrullus, Cucumis, Momordica und Allium; (iii) ausgewählt aus Squash-Kürbis, Kürbis, Zucchini, Gurke, Luffa, Melone, Kalebasse, Wassermelone, Alfalfa, Klee, Bohnen, Erbsen, Kichererbsen, Kopfsalat, Linsen, Lupinen, Mesquite, Johannisbrot, Sojabohnen, Erdnüssen, Tamarinde, Zwiebel, Knoblauch, Frühlingszwiebel, Schalotte, Lauch und Schnittlauch, Kartoffel, Tomate, Aubergine, Capsicum, Chilischoten, Paprikaschoten, Sorghum, Mais, Weizen, Reis, Gerste und Hirse; (iv) ein Mitglied der Familie der Rosaceae; und (v) ausgewählt aus Banane, Avocado, Mango, Zitrus, Apfel, Pflaume, Kirschen, Pfirsich, Aprikose und Mandel.

4. Pflanzenschutzgemisch nach Anspruch 1, ferner umfassend mindestens einen Mykorrhizapilz, ausgewählt aus G. *intraradices* und G. *mosseae.*

5. Pflanzenschutzgemisch nach Anspruch 1 oder Anspruch 4, umfassend Mykorrhiza-Propagationsformen in der Form ausgewählt aus Bodenwurzeln von Pflanzen, umfassend *G. manihotis,* Bodenwurzeln von Pflanzen, umfassend *G. deserticola,* Boden-Hyphen von *G. manihotis,* Boden-Hyphen von *G. deserticola,* Sporen von *G. manihotis,* Sporen von *G. deserticola* und Gemische davon.

6. Pflanzenschutzgemisch nach Anspruch 1, 4 oder 5, umfassend G. *manihotis* und *G. deserticola* in einem Konzentrationsverhältnis zwischen 1:99 bis 99:1.

7. Pflanzenschutzgemisch nach Anspruch 1 oder 4 bis 6, umfassend 30 % lebensfähige Sporen der Spezies *G. manihotis* aus der Gesamtzahl an lebensfähigen Sporen der Spezies *G. manihotis* und G. *deserticola* in dem Gemisch.

8. Pflanzenschutzzusammensetzung, umfassend eine schützende wirksame Menge des Pflanzenschutzgemisches nach Anspruch 1 oder 4 bis 7 und mindestens eines von: einem landwirtschaftlich unbedenklichen Hilfsstoff und einem landwirtschaftlich unbedenklichen Träger.

9. Pflanzenschutzzusammensetzung nach Anspruch 8, wobei mindestens eines der folgenden zutrifft: (i) der Träger ist ausgewählt aus der Gruppe bestehend aus Vermiculit, Kieselgur, Huminsäure, Ton-Zeolith, Maltodextrin und Mannitol; (ii) die gesamten Mykorrhizapilze sind in einer Konzentration zwischen 250 bis 10.000 lebensfähigen Sporen/g vorhanden; (iii) die kombinierte Konzentration aller Spezies von Mykorrhizapilzen in der Zusammensetzung liegt in einer Konzentration von 2500 lebensfähigen Sporen/g vor; (iv) die Zusammensetzung umfasst gemahlene Wurzeln, die durch eine Partikelgröße zwischen 38 $\mu$m bis 1000 $\mu$m gekennzeichnet sind und 200-70000 lebensfähige Sporen/g umfassen; (v) die Zusammensetzung umfasst G. *manihotis* und G. *deserticola* mit einer kombinierten Konzentration von mindestens 2500 Sporen/g; und (vi) die Zusammensetzung umfasst ferner ein Fungizid.

10. Pflanzenschutzzusammensetzung nach Anspruch 8 oder 9, wobei das Fungizid zu einer Fungizidfamilie gehört, ausgewählt aus Methylbenzimidazolen, Carboxiamiden, Dicarboximiden, Methoxyacrylaten, Imidazolen, Phenylpyrrolen, Strobilurinen, Triazolen, Salzen von Phosphonsäure und Salzen von Sulfonsäure; oder ausgewählt aus mindestens einem von Boscalid, Ametoctradin, Thiophanat-methyl, Iprodion, Azoxystrobin, Kresoxim-methyl, Prochloraz, Fludioxonil, Tebuconazol, Kupfersalz, Zinksalz, Kaliumsalz und Dikaliumsalzen von Phosphonsäure, Kupfersulfat, Picoxystrobin, Fluoxastrobin, Orysastrobin, Dimoxystrobin, Pyraclostrobin, Trifloxystrobin und Fluxapyroxad.

11. Verfahren zum Schützen einer Pflanze vor einem Pilzpathogenbefall, wobei das Verfahren das Auftragen einer schützenden wirksamen Menge der Pflanzenschutzzusammensetzung der Ansprüche 8 bis 10 auf mindestens eines von Folgendem umfasst:

   (i) ein Pflanzenpropagationsmaterial einer Pflanze;
   (ii) einen Ort, an dem ein Pilzbefall verhindert oder bekämpft werden soll; und
   (iii) eine Pflanze oder ein Pflanzenteil.

12. Verfahren nach Anspruch 11, wobei mindestens eines der folgenden zutrifft: (i) das Pilzpathogen ist Fusarium; (ii) die Pflanze ist eine landwirtschaftliche Pflanze; (iii) die Pflanze ist ein Mitglied einer Familie, ausgewählt aus Asteraceae, Cucurbitaceae, Fabaceae, Solanaceae, Poaceae und Gramineae; (iv) die Pflanze ist ein Mitglied einer Gattung, ausgewählt aus Cucurbita, Lagenaria, Citrullus, Cucumis, Momordica und Allium; (v) die Pflanze ist ausgewählt aus Squash-Kürbis, Kürbis, Zucchini, Gurke, Luffa, Melone, Kalebasse, Wassermelone, Melone, Alfalfa, Klee, Bohnen, Erbsen, Kichererbsen, Linsen, Lupinen, Mesquite, Johannisbrot, Sojabohnen, Erdnüssen, Tamarinde, Zwiebel, Knoblauch, Frühlingszwiebel, Schalotte, Lauch und Schnittlauch, Kartoffel, Tomate, Aubergine, Capsicum, Chili-Paprika, Paprikaschoten, Sorghum, Mais, Weizen, Reis, Gerste und Hirse; (vi) die Pflanze ist ein Mitglied der Familie Rosaceae; und (vii) die Pflanze ist ausgewählt aus Banane, Avocado, Mango, Zitrus, Apfel, Pflaume, Kirschen, Pfirsich, Aprikose und Mandel.

13. Verfahren nach Anspruch 11 oder 12, wobei mindestens eines der folgenden zutrifft: (i) die Zusammensetzung wird in einer Dosierung von 0,4 Gramm von 2500 lebensfähigen Sporen/Gramm Mykorrhizapilzen pro Pflanze; oder in einer Dosierung von 1000 Sporen von Mykorrhizapilzen pro Pflanze angewendet; (ii) die Zusammensetzung wird mindestens einmal zu einem Zeitpunkt, der ausgewählt ist aus vor Aussaat der Pflanze, während Aussaat der Pflanze und zehn Tage nach Aussaat der Pflanze, auf die Pflanze angewendet; (iii) die Zusammensetzung wird über ein Bewässerungssystem angewendet; (iv) die Zusammensetzung wird durch Bestäuben der Pflanzenwurzeln, Zwiebeln oder Knollen auf die Pflanze angewendet; und (v) die Zusammensetzung wird getrennt von oder begleitend in Kombination mit einem Fungizid auf die Pflanze angewendet.

14. Verfahren nach Anspruch 11 bis 13, wobei das Propagationsmaterial ein Samen ist und das Fungizid mindestens eines des Folgenden ist: (i) gehört zu einer Fungizidfamilie, ausgewählt aus Methylbenzimidazolen, Carboxiamiden, Dicarboximiden, Methoxyacrylaten, Imidazolen, Phenylpyrrolen, Strobilurinen, Triazolen, Salzen von Phosphonsäure und Salzen von Sulfonsäure; (ii) ist ausgewählt aus mindestens einem von Boscalid, Ametoctradin, Thiophanat-methyl, Iprodion, Azoxystrobin, Kresoxim-methyl, Prochloraz, Fludioxonil, Tebuconazol, Kupfersalz, Zinksalz, Kaliumsalz und Dikaliumsalzen von Phosphonsäure, Kupfersulfat, Picoxystrobin, Fluoxastrobin, Orysastrobin, Dimoxystrobin, Pyraclostrobin, Trifloxystrobin und Fluxapyroxad.

15. Saatgut, beschichtet mit der Zusammensetzung nach Ansprüchen 8 bis 10 definiert.


**Revendications**

1. Mélange de protection phytosanitaire comprenant une quantité protectrice efficace de champignons mycorhiziens des espèces G. *manihotis* et G. *deserticola.*

2. Procédé permettant de protéger une plante contre *Fusarium,* de traiter une plante infectée *par Fusarium* ou d'atténuer les dommages causés à une plante par *Fusarium,* comprenant l'utilisation du mélange de protection phytosanitaire de la revendication 1.

3. Procédé selon la revendication 2, dans lequel la plante est une plante agricole qui est au moins l'un parmi : (i) un membre d'une famille choisie parmi les Astéracées, les Cucurbitacées, les Fabacées, les Solanacées, les Poacées et les Graminées ; (ii) un membre d'un genre choisi parmi Cucurbita, Lagenaria, Citrullus, Cucumis, Momordica et Allium ; (iii) choisie parmi la courge, la citrouille, la courgette, le concombre, le luffa, le melon, la calebasse, la pastèque, la luzerne, le trèfle, les haricots, les pois, les pois chiches, la laitue, les lentilles, les lupins, le mesquite, le caroubier, le soja, l'arachide, le tamarinier, l'oignon, l'ail, la ciboule, l'échalote, le poireau et la ciboulette, la pomme de terre, la tomate, l'aubergine, le piment, les piments chili, les poivrons, le sorgho, le maïs, le blé, le riz, l'orge et le millet ; (iv) un membre de la famille des Rosacées ; et (v) choisie parmi le bananier, l'avocatier, le manguier, les agrumes, le pommier, le prunier, le cerisier, le pêcher, l'abricotier et l'amandier.

4. Mélange de protection phytosanitaire selon la revendication 1, comprenant en outre au moins un champignon mycorhizien choisi parmi G. *intraradices* et G. *mosseae.*

5. Mélange de protection phytosanitaire selon la revendication 1 ou la revendication 4, comprenant des propagules mycorhiziennes sous la forme choisie parmi des racines broyées de plantes comprenant G. *manihotis,* des racines broyées de plantes comprenant G. *deserticola,* des hyphes broyés de G. *manihotis,* des hyphes broyés de G. *deserticola,* des spores de G. *manihotis,* des spores de G. *deserticola* et des mélanges de ceux-ci.

6. Mélange de protection phytosanitaire selon les revendications 1, 4 ou 5, comprenant G. *manihotis* et G. *deserticola* dans un rapport de concentration compris entre 1:99 et 99:1.

7. Mélange de protection phytosanitaire selon les revendications 1 ou 4 à 6, comprenant 30 % de spores viables de l'espèce G. *manihotis* sur le nombre total de spores viables de l'espèce G. *manihotis* et G. *deserticola* dans le mélange.

8. Composition de protection phytosanitaire comprenant une quantité protectrice efficace du mélange de protection phytosanitaire selon les revendications 1 ou 4 à 7 et au moins l'un parmi : un adjuvant acceptable sur le plan agricole et un support acceptable sur le plan agricole.

9. Composition de protection phytosanitaire selon la revendication 8, dans laquelle au moins l'une des suivantes est remplie : (i) le support est choisi dans le groupe constitué de la vermiculite, de la terre de diatomées, de l'acide humique, de l'argile zéolite, de la maltodextrine et du mannitol ; (ii) la totalité des champignons mycorhiziens est présente à une concentration comprise entre 250 et 10 000 spores viables/g ; (iii) la concentration combinée de toutes les espèces de champignons mycorhiziens dans la composition est à une concentration de 2500 spores viables/g ; (iv) la composition comprend des racines broyées **caractérisées par** une taille de particule comprise entre 38 μm et 1000 μm et comprenant 200 à 70 000 spores viables/g ; (v) la composition comprend *G. manihotis* et *G. deserticola* avec une concentration combinée d'au moins 2500 spores/g ; et (vi) la composition comprend en outre un fongicide.

10. Composition de protection phytosanitaire selon l'une des revendications 8 ou 9, dans laquelle le fongicide appartient à une famille de fongicides choisie parmi les méthylbenzimidazoles, les carboxamides, les dicarboximides, les méthoxy-acrylates, les imidazoles, les phénylpyrroles, les strobilurines, les triazoles, les sels de l'acide phosphoreux et les sels de l'acide sulfonique ; ou est choisi parmi au moins l'un parmi le boscalide, l'amétoctradine, le thiophanate-méthyle, l'iprodione, l'azoxystrobine, le krésoxim-méthyle, le prochloraz, le fludioxonil, le tébuconazole, un sel de cuivre, un sel de zinc, un sel de potassium et des sels dipotassiques de l'acide phosphoreux, le sulfate de cuivre, la picoxystrobine, la fluoxastrobine, l'oryzastrobine, la dimoxystrobine, la pyraclostrobine, la trifloxystrobine et le fluxapyroxad.

11. Procédé permettant de protéger une plante contre une attaque par un agent pathogène fongique, ledit procédé comprenant l'application d'une quantité protectrice efficace de la composition de protection phytosanitaire des revendications 8 à 10 à au moins l'un parmi :

   (i) un matériel de propagation végétale d'une plante ;
   (ii) un emplacement dans lequel l'infestation fongique doit être prévenue ou contrôlée ; et
   (iii) une plante ou une partie de plante.

12. Procédé selon la revendication 11, dans lequel au moins l'une des suivantes est remplie : (i) l'agent pathogène fongique est le fusarium ; (ii) la plante est une plante agricole ; (iii) la plante est un membre d'une famille choisie parmi les Astéracées, les Cucurbitacées, les Fabacées, les Solanacées, les Poacées et les Graminées ; (iv) la plante est un membre d'un genre choisi parmi Cucurbita, Lagenaria, Citrullus, Cucumis, Momordica et Allium ; (v) la plante est choisie parmi la courge, la citrouille, la courgette, le concombre, le luffa, le melon, la calebasse, la pastèque, le melon, la luzerne, le trèfle, les haricots, les pois, les pois chiches, les lentilles, les lupins, le mesquite, le caroubier, le soja, l'arachide, le tamarinier, l'oignon, l'ail, la ciboule, l'échalote, le poireau et la ciboulette, la pomme de terre, la tomate, l'aubergine, le piment, les piments chili, les poivrons, le sorgho, le maïs, le blé, le riz, l'orge et le millet ; (vi) la plante est un membre de la famille des Rosacées ; et (vii) la plante est choisie parmi le bananier, l'avocatier, le manguier, les agrumes, le pommier, le prunier, le cerisier, le pêcher, l'abricotier et l'amandier.

13. Procédé selon l'une des revendications 11 ou 12, dans lequel au moins l'une des suivantes est remplie : (i) la composition est appliquée à une dose de 0,4 gramme de 2500 spores viables/gramme de champignons mycorhiziens par plante ; ou à une dose de 1000 spores de champignons mycorhiziens par plante ; (ii) la composition est appliquée à la plante au moins une fois à un moment choisi parmi avant le semis de la plante, pendant le semis de la plante, et dix jours après le semis de la plante ; (iii) la composition est appliquée par un système d'irrigation ; (iv) la composition est appliquée à la plante en saupoudrant les racines, les bulbes ou les tubercules de la plante ; et (v) la composition est appliquée à la plante séparément ou simultanément en combinaison avec un fongicide.

14. Procédé selon l'une des revendications 11 à 13, dans lequel le matériel de propagation est une graine et le fongicide est au moins l'un de ce qui suit : (i) appartient à une famille de fongicides choisie parmi les méthylbenzimidazoles, les carboxamides, les dicarboximides, les méthoxy-acrylates, les imidazoles, les phénylpyrroles, les strobilurines, les triazoles, les sels de l'acide phosphoreux et les sels de l'acide sulfonique ; (ii) est choisi parmi au moins l'un parmi le boscalide, l'amétoctradine, le thiophanate-méthyle, l'iprodione, l'azoxystrobine, le krésoxim-méthyle, le prochloraz, le fludioxonil, le tébuconazole, un sel de cuivre, un sel de zinc, un sel de potassium et des sels dipotassiques de l'acide phosphoreux, le sulfate de cuivre, la picoxystrobine, la fluoxastrobine, l'oryzastrobine, la dimoxystrobine, la pyraclostrobine, la trifloxystrobine et le fluxapyroxad.

15. Semence revêtue de la composition telle que définie dans les revendications 8 à 10.

Fig. 1

Plot of Means

Fig. 2

Plot of Means

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111642338 A

**Non-patent literature cited in the description**

- **GARMENDIA et al.** *Biological Control*, 2004, vol. 31, 296-305
- **NWAGA, D. et al.** *African J. Biotech.*, 2007, vol. 6, 190-197
- **DONALD MCGLINCHEY**. Characterisation of bulk solids. CRC Press, 2005, 230-258
- **WALLEY, F.L. et al.** *Mycologia*, 1995, vol. 30, 273-279
- **KADIAN N. et al.** *Indian J. Exp. Bio.*, 2018, vol. 56, 258-266
- **COLBY, S. R.** Calculation of the synergistic and antagonistic response of herbicide combinations. *Weeds*, 1967, vol. 15, 20-22
- **VAKALOUNAKIS, D.J.** *Plant Disease*, 1996, vol. 80, 313-316